# EUROPEAN PATENT APPLICATION

(11) **EP 4 568 004 A1**
(43) Date of publication of application: **11.06.2025**
(21) Application number: 22968335.4
(22) Date of filing: 30.12.2022
(51) Int. Cl.: H01M 50/562

(54) **POWER BATTERY COVER AND POWER BATTERY**

(30) Priority: 12.12.2022 CN 202223339926 U
(71) Applicant: Eve Power Co., Ltd., Jingmen, Hubei 448000 (CN)
(72) Inventor: WU, Xueyin, Hubei 448000 (CN); SHU, Kuanjin, Hubei 448000 (CN); HE, Xiaowu, Hubei 448000 (CN); YUAN, Wei, Hubei 448000 (CN); YUAN, Dingding, Hubei 448000 (CN)
(74) Representative: Biallo, Dario
(86) International application number: PCT/CN2022/143794
(87) International publication number: WO 2024/124634

(57) **Abstract**

A power battery cover is provided. A terminal pressing block of the power battery cover is arranged above a top cover sheet, a pole bottom plate is arranged below the top cover sheet, a copper-aluminum composite plate is formed into composite poles by means of a cold heading or stamping process, and a copper base part is connected to the pole bottom plate by laser welding. Each composite pole sequentially passes through the terminal pressing block, the top cover sheet and the pole bottom plate from top to bottom, a sealing member is sleeved on the composite pole and covers a composite connection surface between an aluminum base part and the copper base part in a sealing manner. The processing steps of the composite pole are less, and the assembly steps and assembly methods are simplified, which improves the processing efficiency and greatly reduces the cost. A power battery is further provided, which includes the power battery cover.

## Description

This application claims priority to Chinese patent application No. 202223339926.2 filed with the China National Intellectual Property Administration (CNIPA) on Dec. 12, 2022, the disclosure of which is incorporated herein by reference in its entirety.

### TECHNICAL FIELD

The present application relates to the field of power battery technology, for example, to a power battery cover and a power battery.

### BACKGROUND

In a power battery, a pole is a component that connects the inside and outside of the battery, one end of the pole is connected to the external circuit of the power battery, and the other end of the pole is connected to the internal battery cell of the power battery, thereby realizing the function of charging and discharging. Since the use of aluminum material in the external circuit of the battery can reduce cost and weight, an aluminum strip is generally used for the connection between the external circuit and the battery, but the negative electrode current collector inside the battery cell is made of copper foil, so the negative pole is required to be made of copper material to ensure the performance of the battery.

According to this requirement, the negative pole of the power battery in the related art often adopts a copper-aluminum composite pole. An aluminum base part and a copper base part of the copper-aluminum composite pole are connected by friction welding to form an integral copper-aluminum composite pole. Since the aluminum base part and the copper base part of the copper-aluminum composite pole need to be welded before assembly, in one aspect, many processing steps are required and the assembly efficiency is low; and in another aspect, stress may exist between the aluminum base part and the copper base part after welding, which has the risk of fracture and is prone to cause battery failure.

### SUMMARY

A power battery cover and a power battery are provided according to the present application, in which composite poles are formed from a copper-aluminum composite plate by means of a cold heading or stamping process. Thus, the welding process is eliminated, the assembly method is simple, the processing efficiency is high, the risk of fracture between the aluminum base part and the copper base part is small, and the reliability is high.

In a first aspect, a power battery cover is provided according to embodiments of the present application, and the power battery cover includes: a top cover sheet, a terminal pressing block, a pole bottom plate, composite poles and a sealing member.

The terminal pressing block is arranged above the top cover sheet.

The pole bottom plate is arranged below the top cover sheet.

The composite poles are formed from a copper-aluminum composite plate by means of a cold heading or stamping process. Each of the composite poles sequentially passes through the terminal pressing block, the top cover sheet and the pole bottom plate from top to bottom. Each of the composite poles includes an aluminum base part and a copper base part connected to each other, the aluminum base part and the copper base part are connected to each other by cold heading or stamping, and the aluminum base part is arranged on the copper base part. End surfaces by which the aluminum base part is connected to the copper base part form a composite connection surface, and the copper base part is connected to the pole bottom plate.

The sealing member is sleeved on the composite pole and sandwiched between the composite pole and the top cover sheet. The sealing member covers the composite connection surface in a sealing manner.

In an embodiment, the aluminum base part is provided with a first annular protrusion, an upper end surface of the terminal pressing block is provided with a first annular limiting recess, and the first annular protrusion abuts against the first annular limiting recess.

In an embodiment, after cold heading or stamping, a lower end surface of the aluminum base part is formed to have a concave portion, an upper end surface of the copper base part is formed to have an extension portion, and the extension portion is connected to the concave portion to form the composite connection surface.

In an embodiment, the sealing member includes a first sealing portion and a second sealing portion, the first sealing portion is arranged on the second sealing portion, and the first sealing portion is arranged between the composite pole and the top cover sheet. The first sealing portion or the second sealing portion covers the composite connection surface in a sealing manner, an upper end surface of the second sealing portion is connected to the copper base part and the top cover sheet, and a lower end surface of the second sealing portion is connected to the pole bottom plate.

In an embodiment, an interference fit is formed between the first sealing portion and the composite pole as well as between the first sealing portion and the top cover sheet.

In an embodiment, the first sealing portion is cylindrical, the second sealing portion is annular, a first step portion is formed between an inner side wall of the first sealing portion and the upper end surface of the second sealing portion, and a second step portion is formed between an outer side wall of the first sealing portion and the upper end surface of the second sealing portion.

In an embodiment, the composite pole is provided with a limiting step, the limiting step abuts against the first step portion, and the aluminum base part is provided with the limiting step; or
the copper base part is provided with the limiting step.

In an embodiment, the copper base part includes a first column body and a second column body. The first column body is connected to the aluminum base part, and the second column body is connected to the first column body. The first column body has the same cross section as the aluminum base part, the second column body has a smaller cross section than the first column body, and the limiting step is formed between the first column body and the second column body.

In an embodiment, the aluminum base part includes a third column body and a fourth column body. The third column body is arranged on the fourth column body and connected to the fourth column body, and the fourth column body is connected to the copper base part. The fourth column body has a smaller cross section than the third column body, the fourth column body has the same cross section as the copper base part, and the limiting step is formed between the third column body and the fourth column body.

In an embodiment, a lower end surface of the top cover sheet is provided with an avoidance notch, and the second step portion abuts against the avoidance notch.

In an embodiment, the power battery cover includes an upper plastic member. The upper plastic member is arranged between the top cover sheet and the terminal pressing block, the composite pole is arranged to pass through the upper plastic member, and the sealing member is sandwiched between the composite pole and the upper plastic member.

In an embodiment, an upper end surface of the upper plastic member is provided with a first rectangular limiting recess, and the terminal pressing block is stuck in the first rectangular limiting recess.

In an embodiment, a lower end surface of the upper plastic member is provided with a second annular protrusion, an upper end surface of the top cover sheet is formed to have a second annular limiting recess, and the second annular protrusion is stuck in the second annular limiting recess.

In an embodiment, the upper end surface of the top cover sheet is formed to have a second rectangular limiting recess, the second annular limiting recess is arranged on a bottom wall of the second rectangular limiting recess, and the upper plastic member is stuck in the second rectangular limiting recess.

In an embodiment, the power battery cover includes a lower plastic member. The lower plastic member is arranged between the top cover sheet and the pole bottom plate, the composite pole is arranged to pass through the lower plastic member, and the sealing member is sandwiched between the composite pole and the lower plastic member.

In an embodiment, a lower end surface of the lower plastic member is provided with a third rectangular limiting recess, and the pole bottom plate is stuck in the third rectangular limiting groove.

In an embodiment, the lower plastic member is provided with a through hole, the composite pole is arranged to pass through the through hole, and at least one of a top end and a bottom end of the through hole is provided with a chamfer.

In a second aspect, a power battery is provided according to embodiments of the present application, which includes the power battery cover in any of the above solutions.

The beneficial effects of the present application are as follows.

A power battery cover is provided according to the present application. The power battery cover includes a top cover sheet, a terminal pressing block, a pole bottom plate, composite poles and a sealing member. The terminal pressing block is arranged above the top cover sheet, and the pole bottom plate is arranged below the top cover sheet. The composite poles are formed from a copper-aluminum composite plate by means of a cold heading or stamping process. Each of the composite poles includes an aluminum base part and a copper base part connected to each other, end surfaces by which the aluminum base part is connected to the copper base part form a composite connection surface, and the copper base part is connected to the pole bottom plate by laser welding. Each of the composite poles is arranged to sequentially pass through the terminal pressing block, the top cover sheet and the pole bottom plate from top to bottom. The sealing member is sleeved on the composite pole and sandwiched between the composite pole and the top cover sheet. The sealing member can cover the composite connection surface in a sealing manner. Compared with the copper-aluminum composite pole formed by friction welding in the related art, the composite pole in the present application has fewer processing steps, and the assembly steps and assembly method are simplified, which improves the processing efficiency, and greatly reduces the material and processing costs. In addition, there is no weld joint between the aluminum base part and the copper base part, so the risk of fracture is small and the reliability is high.

A power battery is further provided according to the present application, which includes the above-described power battery cover. The power battery cover has fewer processing steps, low assembly difficulty, and high assembly efficiency. Moreover, the overall thickness of the power battery cover is thin, which is conducive to saving the internal space of the power battery and improving the energy density of the power battery.

### BRIEF DESCRIPTION OF THE DRAWINGS

FIG. 1 is an exploded view of a power battery cover provided in an embodiment one of the present application;
FIG. 2 is an exploded view of the power battery cover provided in the embodiment one of the present application from another visual angle;
FIG. 3 is a schematic structural diagram of the power battery cover in an assembled state provided in the embodiment one of the present application;
FIG. 4 is a sectional view of the power battery cover provided in the embodiment one of the present application;
FIG. 5 is a partial enlarged view of A in FIG. 4;
FIG. 6 is a schematic structural diagram of a sealing member provided in the embodiment one of the present application;
FIG. 7 is a schematic structural diagram of a composite pole provided in the embodiment one of the present application;
FIG. 8 is a sectional view one of the composite pole provided in the embodiment one of the present application;
FIG. 9 is a sectional view two of the composite pole provided in the embodiment one of the present application;
FIG. 10 is a sectional view three of the composite pole provided in the embodiment one of the present application;
FIG. 11 is a partial enlarged view of a power battery cover in an assembled state provided in an embodiment two of the present application;
FIG. 12 is a sectional view one of a composite pole provided in the embodiment two of the present application; and
FIG. 13 is a sectional view two of the composite pole provided in the embodiment two of the present application.

### Reference numerals list:

100 top cover sheet
110 second rectangular limiting recess
120 second annular limiting recess
130 injection hole
140 avoidance notch
200 terminal pressing block
210 first annular limiting recess
220 first countersunk hole
300 pole bottom plate
310 second countersunk hole
400 composite pole
410 aluminum base part
4101 first annular protrusion
4102 concave portion
411 third column body
412 fourth column body
420 copper base part
4201 limiting step
4202 extension portion
421 first column body
422 second column body
430 composite connection surface
500 sealing member
510 first sealing portion
5101 first step portion
520 second sealing portion
5102 second step portion
600 upper plastic member
610 first rectangular limiting recess
620 second annular protrusion
700 lower plastic member
710 third rectangular limiting recess
720 chamfer

### DETAILED DESCRIPTION

In the description of this application, it is to be noted that, unless otherwise expressly specified and limited, the terms "connected to each other", "connected" or "fixed" are to be construed in a broad sense, for example, as permanently connected or detachably connected or integrally formed; mechanically connected or electrically connected; directly connected to each other or indirectly connected to each other via an intermediary; or internal connection of two components or interaction relationship between two components. For the person of ordinary skill in the art, meanings of the above terms in the present application may be construed based on situations.

In the present application, unless otherwise expressly specified and limited, when a first feature is described as "above" or "below" a second feature, the first feature and the second feature may be in direct contact, or be in contact via another feature between the two features. Moreover, when the first feature is described as "on", "above" or "over" the second feature, the first feature may be right on, above or over the second feature or the first feature may be diagonally on, above or over the second feature, or the first feature may be simply at a higher level than the second feature. When the first feature is described as "under", "below" or "underneath" the second feature, the first feature may be right under, below or underneath the second feature or the first feature may be diagonally under, below or underneath the second feature, or the first feature may be simply at a lower level than the second feature.

In the description of this article, it should be understood that the orientation or position relationships indicated by the terms such as "upper", "lower", "left", "right", etc., are based on the orientation or position relationship shown in the drawings, which is only for the convenience of description and simplification of operation, and does not indicate or imply that the device or element referred to must have a specific orientation, be constructed and operated in a specific orientation. Furthermore, the terms "first" and "second" are simply used to distinguish in the description and have no special meaning.

### Embodiment One

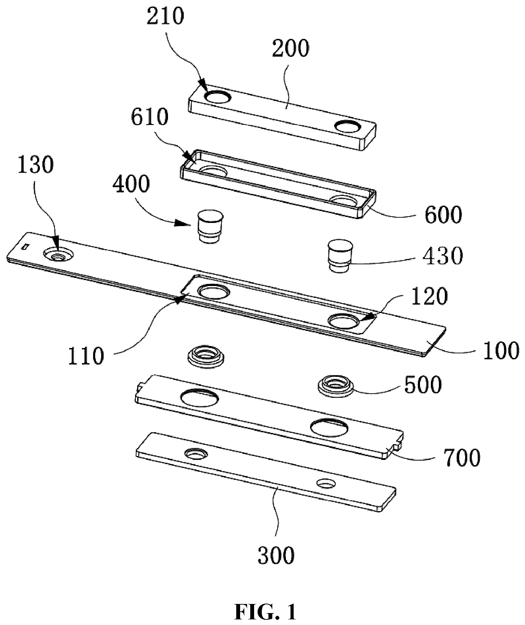

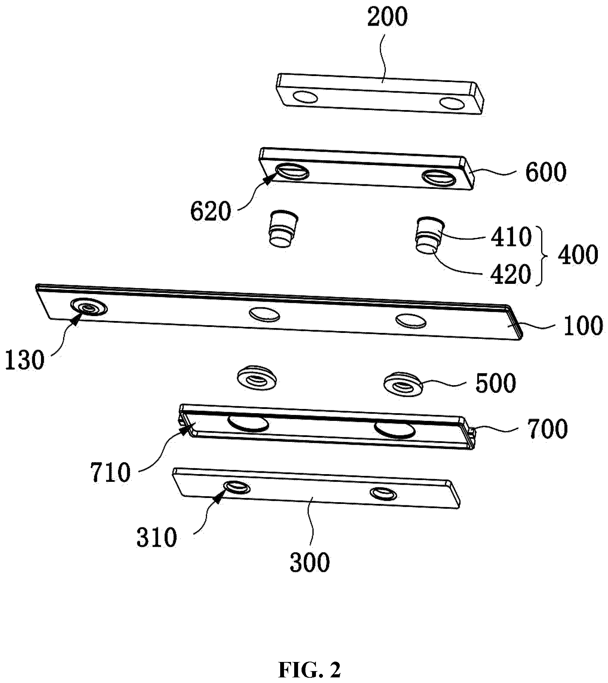

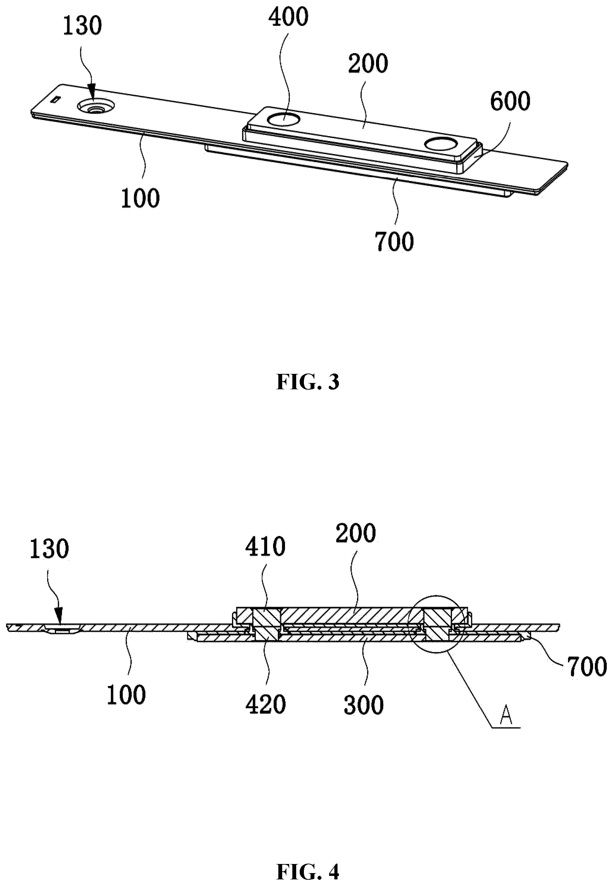

As shown in FIG. 1 to FIG. 5, a power battery cover is provided according to this embodiment. The power battery cover includes a top cover sheet 100, a terminal pressing block 200, a pole bottom plate 300, composite poles 400 and a sealing member 500. The terminal pressing block 200 is arranged above the top cover sheet 100, and the pole bottom plate 300 is arranged below the top cover sheet 100. The composite poles 400 are formed from a copper-aluminum composite plate by means of a cold heading or stamping process, and each of the composite poles 400 is arranged to sequentially pass through the terminal pressing block 200, the top cover sheet 100 and the pole bottom plate 300 from top to bottom. The composite pole 400 includes an aluminum base part 410 and a copper base part 420 connected to each other, the aluminum base part 410 is arranged on the copper base part 420, end surfaces by which the aluminum base part 410 is connected to the copper base part 420 form a composite connection surface 430, and the copper base part 420 is connected to the pole bottom plate 300 by laser welding. The sealing member 500 is sleeved on the composite pole 400 and sandwiched between the composite pole 400 and the top cover sheet 100. The sealing member 500 can cover the composite connection surface 430 between the aluminum base part 410 and the copper base part 420 in a sealing manner. Compared with the copper-aluminum composite pole 400 formed by friction welding in the related art, the composite pole 400 in this embodiment has fewer processing steps, and the assembly steps and assembly method are simplified, which improves the processing efficiency, and greatly reduces the material and processing costs. In addition, there is no weld joint between the aluminum base part 410 and the copper base part 420, so the risk of fracture is small and the reliability is high. Exemplarily, the height of the copper base part 420 is set in the range of 0.3 mm to 5 mm.

In addition, in order to facilitate the positioning of the composite pole 400, the aluminum base part 410 is provided with a first annular protrusion 4101, and accordingly, an upper end surface of the terminal pressing block 200 is provided with a first annular limiting recess 210. The first annular protrusion 4101 can abut against the first annular limiting recess 210, thereby playing a limiting role to prevent the composite pole 400 from falling out.

As an exemplary solution, the top cover sheet 100 and the terminal pressing block 200 in this embodiment are made of aluminum material. Compared with the solution in which the terminal pressing block 200 in the related art is made of copper-aluminum composite plate, the terminal pressing block 200 in this embodiment is made of pure aluminum material, the assembly method is simple, the assembly difficulty is small, the selection limitation of the terminal pressing block 200 is small, and the processing cost is low. The pole bottom plate 300 is made of copper material. Two composite poles 400 and two seals 500 are provided, and the composite poles 400 and the seals 500 are in one-to-one correspondence. The sealing member 500 is made of insulating material and has a certain deformation capacity, so that the gap between the top cover sheet 100 and the composite pole 400 can be filled after cold heading or stamping to ensure the reliability of the sealing. For example, the deformation amount of the sealing member 500 in this embodiment ranges from about 25% to about 45%.

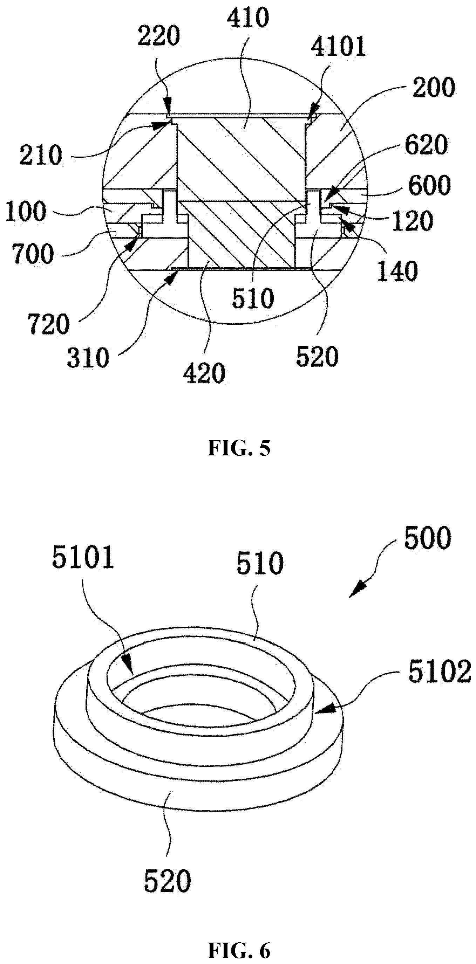

In an embodiment, referring to FIG. 5 and FIG. 6, the sealing member 500 in this embodiment includes a first sealing portion 510 and a second sealing portion 520. The first sealing portion 510 is arranged on the second sealing portion 520, and the first sealing portion 510 is arranged between the composite pole 400 and the top cover sheet 100. The first sealing portion 510 is arranged to cover the composite connection surface 430 in a sealing manner. An upper end surface of the second sealing portion 520 is connected to a limiting step 4201 of the copper base part 420 and the top cover sheet 100, and a lower end surface of the second sealing portion 520 is connected to an upper end surface of the pole bottom plate 300. Exemplarily, the first sealing portion 510 is cylindrical, the second sealing portion 520 is annular, a first step portion 5101 is formed between an inner side wall of the first sealing portion 510 and an upper end surface of the second sealing portion 520, and a second step portion 5102 is formed between an outer side wall of the first sealing portion 510 and the upper end surface of the second sealing portion 520. The copper base part 420 of the composite pole 400 is provided with a limiting step 4201, and the limiting step 4201 can abut against the first step portion 5101, so that the sealing member 500 can prevent the composite pole 400 from falling out, and a sealing path is formed between the first step portion 5101 and the copper base part 420, which is used to seal the gap between the composite pole 400 and the sealing member 500.

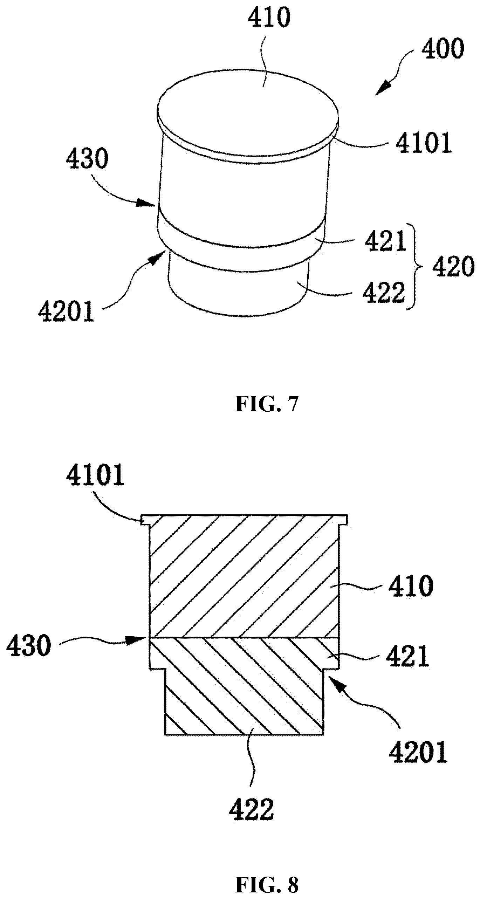

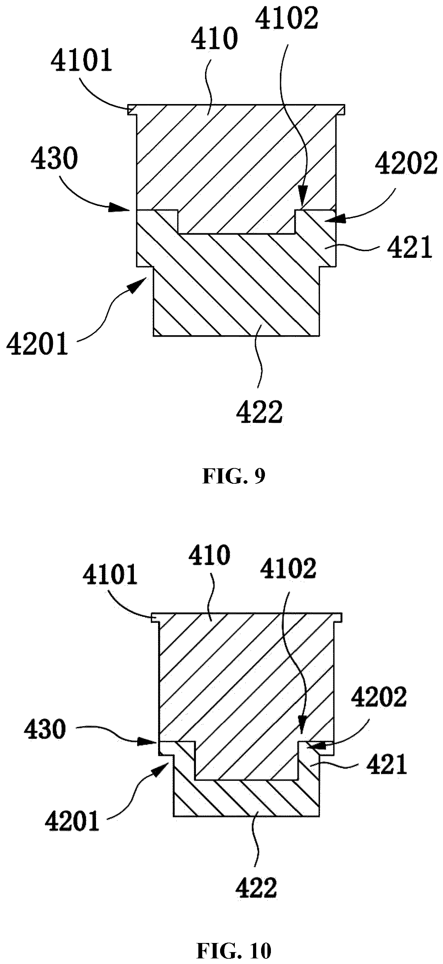

For example, referring to FIG. 5, FIG. 7 and FIG. 8, the copper base part 420 of the composite pole 400 in this embodiment includes a first column body 421 and a second column body 422, the first column body 421 is connected to the aluminum base part 410, the composite connection surface 430 is formed between the first column body 421 and the aluminum base part 410, and the first sealing portion 510 of the sealing member 500 covers the composite connection surface 430 in a sealing manner. The second column body 422 is connected to the first column body 421. The first column body 421 has the same cross section as the aluminum base part 410. The second column body 422 has a smaller cross section than the first column body 421. Since the second column body 422 has a smaller cross section than the first column body 421, the limiting step 4201 is formed on the copper base part 420 of the composite pole 400. The limiting step 4201 may abut against the first step portion 5101 of the sealing member 500, thereby preventing the composite pole 400 from falling out or shaking and ensuring a good fixing effect of the composite pole 400. Of course, in an embodiment, referring to FIG. 9 and FIG. 10, after the aluminum base part 410 and the copper base part 420 are connected by cold heading or stamping, a lower end surface of the aluminum base part 410 may be formed to possibly have a concave portion 4102, and an upper end surface of the first column body 421 of the copper base part 420 is formed to have an extension portion 4202. The extension portion 4202 and the concave portion 4102 are connected to form a composite connection surface 430, and the first sealing portion 510 of the sealing member 500 can cover the composite connection surface 430 in a sealing manner.

In an embodiment, a lower end surface of the top cover sheet 100 is provided with an avoidance notch 140, and the second step portion 5102 abuts against the avoidance notch 140, thereby forming another sealing path between the second step portion 5102 of the sealing member 500 and the avoidance notch 140 of the top cover sheet 100, which is used to seal the gap between the top cover sheet 100 and the sealing member 500, thereby ensuring a good sealing effect of the sealing member 500 and avoiding leakage.

It is to be noted that an interference fit is formed between the first sealing portion 510 and the composite pole 400 as well as between the first sealing portion 510 and the top cover sheet 100, thereby ensuring a good sealing performance of the sealing member 500 and a high reliability of the sealing. Further, before the cold heading or stamping, referring to FIG. 5, a first sealing cavity may be formed between the first step portion 5101 and the limiting step 4201 of the copper base part 420, and a second sealing cavity may be formed between the second step portion 5102 and the avoidance notch 140 provided on the lower end surface of the top cover sheet 100. The first sealing cavity and the second sealing cavity can accommodate the deformed first sealing portion 510 or the second sealing portion 520. By providing the avoidance notch 140, the accommodation space of the second sealing cavity can be increased, so that the deformed first sealing portion 510 or the deformed second sealing portion 520 can be accommodated in the second sealing cavity, avoiding the situation of insufficient accommodation space.

Continuing to refer to FIG. 1 to FIG. 5, the power battery cover includes an upper plastic member 600, and the upper plastic member 600 is arranged between the top cover sheet 100 and the terminal pressing block 200. The composite pole 400 is arranged to pass through the upper plastic member 600, and the sealing member 500 is sandwiched between the composite pole 400 and the upper plastic member 600. The upper plastic member 600 is made of insulating material. The arrangement of the upper plastic member 600 enables the top cover sheet 100 to be insulated from the terminal pressing block 200 to avoid electrical connection. In an embodiment, an upper end surface of the upper plastic member 600 is provided with a first rectangular limiting recess 610, and the terminal pressing block 200 is stuck in the first rectangular limiting recess 610. In one aspect, with the arrangement of the first rectangular limiting recess 610, the overall height of the power battery cover can be reduced, which is beneficial to improving the energy density of the power battery, and in another aspect, the first rectangular limiting recess 610 can position the terminal pressing block 200, which is convenient for the assembly process, beneficial to improving the assembly efficiency, and the production efficiency of the product is high.

In an embodiment, a lower end surface of the upper plastic member 600 is further provided with a second annular protrusion 620, an upper end surface of the top cover sheet 100 is formed to have a second annular limiting recess 120, and the second annular protrusion 620 is stuck in the second annular limiting recess 120. With the arrangement of the second annular limiting recess 120 and the second annular protrusion 620, it is convenient to position the top cover sheet 100 and the upper plastic member 600, thus ensuring accurate positioning, which is conducive to speeding up the assembly process and improving assembly efficiency.

In an embodiment, the upper end surface of the top cover sheet 100 is formed to have a second rectangular limiting recess 110, a second annular limiting recess 120 is arranged on a bottom wall of the second rectangular limiting recess 110, and the upper plastic member 600 is clamped in the second rectangular limiting recess 110. In one aspect, with the arrangement of the second rectangular limiting recess 110, the overall height of the power battery cover can be reduced, which is beneficial to improving the energy density of the power battery, and in another aspect, the second rectangular limiting recess 110 can also assist in positioning the terminal pressing block 200, which is convenient for the assembly process, beneficial to improving the assembly efficiency, and the production efficiency of the product is high.

The power battery cover also includes a lower plastic member 700, and the lower plastic member 700 is arranged between the top cover sheet 100 and the pole bottom plate 300. The composite pole 400 is arranged to pass through the lower plastic member 700, and the sealing member 500 is sandwiched between the composite pole 400 and the lower plastic member 700. The lower plastic member 700 is made of insulating material. The arrangement of the lower plastic member 700 enables the top cover sheet 100 to be insulated from the pole bottom plate 300 to avoid electrical connection. In an embodiment, a lower end surface of the lower plastic member 700 is provided with a third rectangular limiting recess 710, and the pole bottom plate 300 is stuck in the third rectangular limiting recess 710. In one aspect, with the arrangement of the third rectangular limiting recess 710, the overall height of the power battery cover can be reduced, which is beneficial to improving the energy density of the power battery, and in another aspect, the third rectangular limiting recess 710 can position the pole bottom plate 300, which is convenient for the assembly process, beneficial to improving the assembly efficiency, and the production efficiency of the product is high.

In an embodiment, the lower plastic member 700 is provided with a through hole, the composite pole 400 is arranged to pass through the through hole, and at least one of a top end and a bottom end of the through hole is provided with a chamfer 720. With the arrangement of the chamfer 720, the composite pole 400 or the sealing member 500 can be arranged to more smoothly pass through the through hole, which is beneficial to the assembly process and improves the assembly efficiency.

In addition, in order to facilitate the injection, the top cover sheet 100 is further provided with an injection hole 130 at one end thereof, and electrolyte can be injected into the shell of the power battery through the injection hole 130.

Continuing to refer to FIG. 5, in order to prevent a top end of the composite pole 400 from extending beyond an upper end surface of the terminal pressing block 200 after assembly, in this embodiment, the upper end surface of the terminal pressing block 200 is provided with a first countersunk hole 220, and the diameter of the first countersunk hole 220 is greater than the diameter of the first annular limiting recess 210. Moreover, in order to prevent the bottom end of the composite pole 400 from extending beyond a lower end surface of the pole bottom plate 300 after assembly, in this embodiment, the lower end surface of the pole bottom plate 300 is provided with a second countersunk hole 310, and the diameter of the second countersunk hole 310 is greater than the diameter of the copper base part 420.

A power battery is further provided according to this embodiment, which includes the power battery cover in the above solution. The power battery cover in this embodiment has fewer processing steps, low assembly difficulty, and high assembly efficiency. Moreover, the overall thickness of the power battery cover is thin, which is conducive to saving the internal space of the power battery and improving the energy density of the power battery.

### Embodiment Two

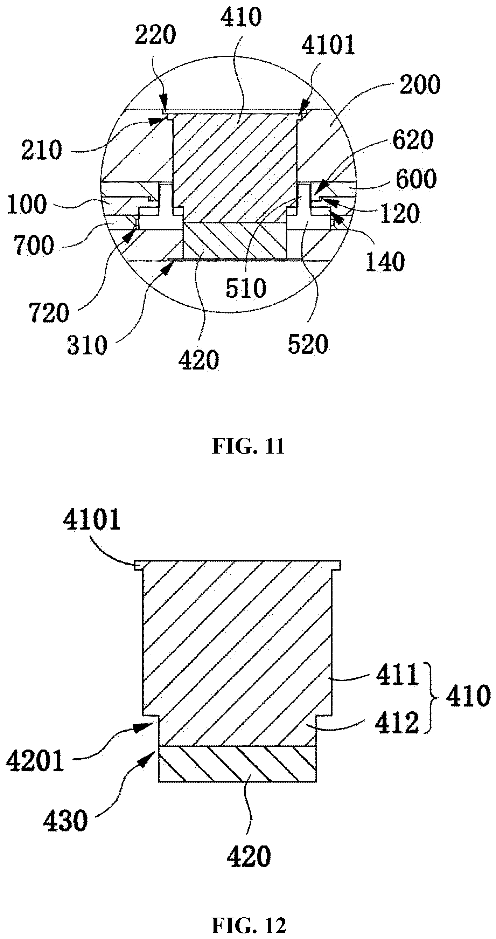

A power battery cover is provided according to this embodiment, referring to FIG. 11 and FIG. 12, which is different from the power battery cover in Embodiment 1 in that: the composite pole 400 in this embodiment includes an aluminum base part 410 and a copper base part 420, the aluminum base part 410 includes a third column body 411 and a fourth column body 412, and the third column body 411 is arranged on the fourth column body 412 and connected to the fourth column body 412. The fourth column body 412 is connected to the copper base part 420, to form a composite connection surface 430. A first annular protrusion 4101 is arranged on the third column body 411 at an end away from the fourth column body 412. The fourth column body 412 has a smaller cross section than the third column body 411, and the fourth column body 412 has the same cross section as the copper base part 420, so that a limiting step 4201 is formed on the aluminum base part 410, thereby preventing the composite pole 400 from falling out or shaking.

The sealing member 500 includes a first sealing portion 510 in a cylindrical shape and a second sealing portion 520 in an annular shape. The first sealing portion 510 is arranged on the second sealing portion 520. The first sealing portion 510 is arranged between the composite pole 400 and the top cover sheet 100. The second sealing portion 520 is arranged between the composite pole 400 and the lower plastic member 700. The second sealing portion 520 is arranged to cover the composite connection surface 430 in a sealing manner. A first step portion 5101 is formed between an inner side wall of the first sealing portion 510 and an upper end surface of the second sealing portion 520. The first step portion 5101 can abut against the limiting step 4201. A second step portion 5102 is formed between an outer side wall of the first sealing portion 510 and the upper end surface of the second sealing portion 520. The second step portion 5102 can abut against the avoidance notch 140 of the top cover sheet 100. A lower end surface of the second sealing portion 520 is connected to the upper end surface of the pole bottom plate 300. In this embodiment, two sealing paths are formed on two sides of the second sealing portion 520 of the sealing member 500 respectively, one of which seals the gap between the composite pole 400 and the sealing member 500, and the other seals the gap between the top cover sheet 100 and the sealing member 500. The sealing member 500 has a good sealing effect, and avoids leakage.

It is to be noted that an interference fit is formed between the first sealing portion 510 and the composite pole 400 as well as between the first sealing portion 510 and the top cover sheet 100, thereby ensuring a good sealing performance of the sealing member 500 and a high reliability of the sealing. Further, before the cold heading or stamping, referring to FIG. 11, a first sealing cavity may be formed between the first step portion 5101 and the limiting step 4201, and a second sealing cavity may be formed between the second step portion 5102 and the avoidance notch 140 provided on the lower end surface of the top cover sheet 100. The first sealing cavity and the second sealing cavity can accommodate the deformed first sealing portion 510 or the second sealing portion 520.

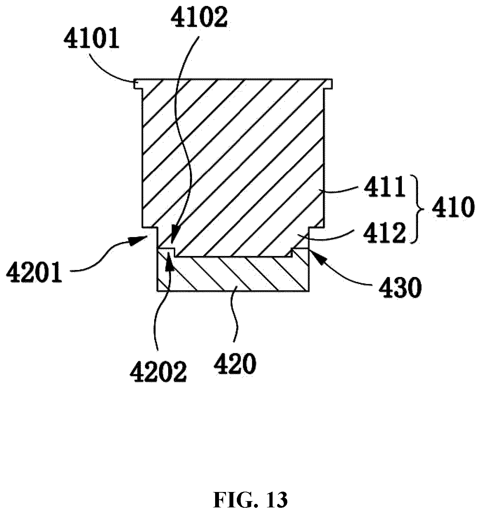

Of course, in an embodiment, referring to FIG. 13, after the aluminum base part 410 and the copper base part 420 are connected by cold heading or stamping, a lower end surface of the fourth column body 412 of the aluminum base part 410 may be formed to possibly have a concave portion 4102, and an upper end surface of the copper base part 420 may be formed to have an extension portion 4202. The extension portion 4202 and the concave portion 4102 are connected to form a composite connection surface 430, and the second sealing portion 520 of the sealing member 500 can cover the composite connection surface 430 in a sealing manner.

A power battery is further provided according to this embodiment, which includes the power battery cover in the above solution. The power battery cover in this embodiment has fewer processing steps, low assembly difficulty, and high assembly efficiency. Moreover, the overall thickness of the power battery cover is thin, which is conducive to saving the internal space of the power battery and improving the energy density of the power battery.

The remaining structures in this embodiment are the same as those in the embodiment one.

## Claims

1. A power battery cover, comprising:
a top cover sheet (100);
a terminal pressing block (200) arranged above the top cover sheet (100);
a pole bottom plate (300) arranged below the top cover sheet (100);
composite poles (400) formed from a copper-aluminum composite plate by means of a cold heading or stamping process, wherein each of the composite poles (400) sequentially passes through the terminal pressing block (200), the top cover sheet (100) and the pole bottom plate (300) from top to bottom, each of the composite poles (400) comprises an aluminum base part (410) and a copper base part (420) connected to each other, the aluminum base part (410) is arranged on the copper base part (420), end surfaces by which the aluminum base part (410) is connected to the copper base part (420) form a composite connection surface (430), and the copper base part (420) is connected to the pole bottom plate (300); and
a sealing member (500) sleeved on the composite pole (400) and sandwiched between the composite pole (400) and the top cover sheet (100), wherein the sealing member (500) covers the composite connection surface (430) in a sealing manner.

2. The power battery cover according to claim 1, wherein the aluminum base part (410) is provided with a first annular protrusion (4101), an upper end surface of the terminal pressing block (200) is provided with a first annular limiting recess (210), and the first annular protrusion (4101) abuts against the first annular limiting recess (210).

3. The power battery cover according to claim 1, wherein after cold heading or stamping, a lower end surface of the aluminum base part (410) is formed to have a concave portion (4102), an upper end surface of the copper base part (420) is formed to have an extension portion (4202), and the extension portion (4202) is connected to the concave portion (4102) to form the composite connection surface (430).

4. The power battery cover according to claim 1, wherein the sealing member (500) comprises a first sealing portion (510) and a second sealing portion (520), the first sealing portion (510) is arranged on the second sealing portion (520), the first sealing portion (510) is arranged between the composite pole (400) and the top cover sheet (100), the first sealing portion (510) or the second sealing portion (520) covers the composite connection surface (430) in a sealing manner, an upper end surface of the second sealing portion (520) is connected to the copper base part (420) and the top cover sheet (100), and a lower end surface of the second sealing portion (520) is connected to the pole bottom plate (300).

5. The power battery cover according to claim 4, wherein an interference fit is formed between the first sealing portion (510) and the composite pole (400) as well as between the first sealing portion (510) and the top cover sheet (100).

6. The power battery cover according to claim 4, wherein the first sealing portion (510) is cylindrical, the second sealing portion (520) is annular, a first step portion (5101) is formed between an inner side wall of the first sealing portion (510) and the upper end surface of the second sealing portion (520), and a second step portion (5102) is formed between an outer side wall of the first sealing portion (510) and the upper end surface of the second sealing portion (520).

7. The power battery cover according to claim 6, wherein the composite pole (400) is provided with a limiting step (4201), the limiting step (4201) abuts against the first step portion (5101), and the aluminum base part (410) is provided with the limiting step (4201); or
the copper base part (420) is provided with the limiting step (4201).

8. The power battery cover according to claim 7, wherein the copper base part (420) comprises a first column body (421) and a second column body (422), the first column body (421) is connected to the aluminum base part (410), the second column body (422) is connected to the first column body (421), the first column body (421) has a same cross section as the aluminum base part (410), the second column body (422) has a smaller cross section than the first column body (421), and the limiting step (4201) is formed between the first column body (421) and the second column body (422).

9. The power battery cover according to claim 7, wherein the aluminum base part (410) comprises a third column body (411) and a fourth column body (412), the third column body (411) is arranged on the fourth column body (412) and connected to the fourth column body (412), the fourth column body (412) is connected to the copper base part (420), the fourth column body (412) has a smaller cross section than the third column body (411), the fourth column body (412) has a same cross section as the copper base part (420), and the limiting step (4201) is formed between the third column body (411) and the fourth column body (412).

10. The power battery cover according to claim 6, wherein a lower end surface of the top cover sheet (100) is provided with an avoidance notch (140), and the second step portion (5102) abuts against the avoidance notch (140).

11. The power battery cover according to any one of claims 1 to 10, comprising an upper plastic member (600), wherein the upper plastic member (600) is arranged between the top cover sheet (100) and the terminal pressing block (200), the composite pole (400) is arranged to pass through the upper plastic member (600), and the sealing member (500) is sandwiched between the composite pole (400) and the upper plastic member (600).

12. The power battery cover according to claim 11, wherein an upper end surface of the upper plastic member (600) is provided with a first rectangular limiting recess (610), and the terminal pressing block (200) is stuck in the first rectangular limiting recess (610).

13. The power battery cover according to claim 11, wherein a lower end surface of the upper plastic member (600) is provided with a second annular protrusion (620), an upper end surface of the top cover sheet (100) is formed to have a second annular limiting recess (120), and the second annular protrusion (620) is stuck in the second annular limiting recess (120).

14. The power battery cover according to claim 13, wherein the upper end surface of the top cover sheet (100) is formed to have a second rectangular limiting recess (110), the second annular limiting recess (120) is arranged on a bottom wall of the second rectangular limiting recess (110), and the upper plastic member (600) is stuck in the second rectangular limiting recess (110).

15. The power battery cover according to any one of claims 1 to 10, comprising a lower plastic member (700), wherein the lower plastic member (700) is arranged between the top cover sheet (100) and the pole bottom plate (300), the composite pole (400) is arranged to pass through the lower plastic member (700), and the sealing member (500) is sandwiched between the composite pole (400) and the lower plastic member (700).

16. The power battery cover according to claim 15, wherein a lower end surface of the lower plastic member (700) is provided with a third rectangular limiting recess (710), and the pole bottom plate (300) is stuck in the third rectangular limiting groove (710).

17. The power battery cover according to claim 15, wherein the lower plastic member (700) is provided with a through hole, the composite pole (400) is arranged to pass through the through hole, and at least one of a top end and a bottom end of the through hole is provided with a chamfer (720).

18. A power battery, comprising the power battery cover according to any one of claims 1 to 17.
